# EUROPÄISCHE PATENTSCHRIFT

(11) **EP 3 802 051 B1**
(45) Veröffentlichungstag und Bekanntmachung des Hinweises auf die Patenterteilung: **01.01.2025**
(21) Anmeldenummer: 20728720.2
(22) Anmeldetag: 26.05.2020
(51) Int. Cl.: B29C 45/18, B65G 53/60, B65G 53/46

(54) **BAUKASTEN ZUM ERSTELLEN EINER BEHANDLUNGSEINHEIT FÜR GRANULAT**
MODULAR SYSTEM FOR BUILDING A TREATMENT UNIT FOR GRANULATE
SYSTÈME MODULAIRE POUR LA RÉALISATION D'UNE UNITÉ DE TRAITEMENT DE GRANULÉS

(30) Priorität: 04.07.2019 DE 102019118093
(43) Veröffentlichungstag der Anmeldung: 14.04.2021
(73) Patentinhaber: Helios Gerätebau für Kunststofftechnik GmbH, 83022 Rosenheim (DE)
(72) Erfinder: WILHELM, Klaus, 83026 Rosenheim (DE)
(74) Vertreter: Weickmann & Weickmann PartmbB
(86) Internationale Anmeldenummer: PCT/EP2020/064535
(87) Internationale Veröffentlichungsnummer: WO 2021/001090

(56) Entgegenhaltungen:
- EP-A1- 0 117 397
- EP-A1- 2 711 097
- EP-A2- 0 166 959
- EP-B1- 0 166 959
- EP-B2- 0 117 397
- WO-A1-90/02643
- CN-U- 206 857 425
- DE-A1- 102016 119 827
- DE-A1- 2 041 230
- DE-C- 342 197
- DE-C2- 2 041 230
- JP-U- S4 719 974
- US-A- 2 734 782
- US-A- 3 799 367
- US-A1- 2015 151 229

## Beschreibung

### I. Anwendungsgebiet

Die Erfindung betrifft das Behandeln von Schüttgütern, insbesondere das Befreien von Schüttgütern von dem darin enthaltenen Staub, insbesondere mittels Ionisierung, da der Staub häufig mittels elektrostatischer Aufladung an den Granulatkörnern haftet. Genauer betrifft die Erfindung einen Baukasten zum Erstellen einer Behandlungseinheit für Granulat mit den Merkmalen des Oberbegriffs von Anspruch 1.

### II. Technischer Hintergrund

Vor allem in der Kunststofftechnik, aber auch in der Pharmazie und der Lebensmitteltechnik, müssen häufig Rohmaterialien in Form von Schüttgütern - beispielsweise Granulaten, Mahlgütern, groben Pulvern o.ä. - gehandhabt, z.B. transportiert, und behandelt, z.B. getrocknet und/oder entstaubt, werden. Für die Zwecke der vorliegenden Anmeldung werden alle Schüttgüter mit dem verkürzenden Begriff "Granulat" bezeichnet.

Gerade das Transportieren dieser Schüttgüter erfolgt häufig mittels pneumatischer Förderung, insbesondere mittels Flug-Förderung, bei der das Granulat mittels Luftströmung und größtenteils darin mitfliegend durch Förderleitungen an den gewünschten Ort gebracht wird.

Das Granulat soll für die Benutzung in einem Verbraucher, beispielsweise für den Einsatz als Rohmaterial in einer Kunststoff-Spritzgussmaschine, möglichst sauber sein und insbesondere nicht mit staubförmigen Verunreinigungen belastet sein. Diese staubförmigen Verunreinigungen können sowohl aus Fremdmaterial bestehen, welches bei der Herstellung oder beim Transport unbeabsichtigt dem Granulat beigefügt wurde oder es kann sich auch um staubförmige Partikel aus dem gleichen Material wie das Granulat selbst handeln, was jedoch je nach anschließendem Verwendungszweck ebenfalls unerwünscht sein kann.

Staub oder staubförmige Verunreinigungen im Sinne der vorliegenden Beschreibung sollen vorzugsweise eine Partikelgröße besitzen, deren Durchmesser höchstens 1/10, besser höchstens 1/30, besser höchstens 1/100 besser höchstens 1/1000 des Durchmessers eines Granulat-Kornes beträgt.

Deshalb besteht das generelle Ziel, solche Granulate vor der Verwendung von dem darin enthaltenen Staubanteil zu trennen.

Hierfür stehen unterschiedliche Techniken zur Verfügung, von einfachen Sieben über ein Abtrennen der Transportluft von Granulat und das Filtern der Transportluft bis hin zu der Fraktionentrennung mittels eines Zyklons.

Eines der dabei auftretenden Probleme ist die starke Haftung von Staubpartikeln und Granulatpartikeln aneinander, aber auch die Anhaftung von Staubpartikeln an Vorrichtungsteilen wie Förderleitungen oder Granulatbehältern.

Diese starke Anhaftung ist häufig durch elektrostatische Aufladung bewirkt, sodass ein Entfernen des Staubes mit mechanischen Maßnahmen in der Regel erst durchgeführt werden kann, wenn diese Bindungskräfte aufgehoben worden sind.

Prinzipiell ist dies bekanntermaßen dadurch möglich, dass die unterschiedlich geladenen und sich dadurch anziehenden Teile, in diesem Fall Staubpartikel einerseits und Granulatpartikel andererseits, jeweils statisch entladen werden, beispielsweise indem die eine Fraktion geerdet wird.

Bei einer sehr großen Anzahl von sehr kleinen Partikeln, wie im vorliegenden Fall, ist dies in der Praxis jedoch schwierig.

Beispielsweise wurde bereits versucht, das Granulat durch ständiges Hochwirbeln im unten verschlossenen Entstaubungsbehälter zu vereinzeln und in innigen Kontakt mit ionisierter Luft zu bringen. Dies kann jedoch allein durch das Zusammenprallen von Granulatkörnern weiteren Abrieb und dadurch Staub hervorrufen.

Des Weiteren wurde versucht, die staubbeladene Luft über eine Luft-Auslassöffnung abzusaugen und nicht mittels Überdruck hinaus zu drücken, wobei die Luft-Auslassöffnung von einem Sieb verschlossen war, welches ein Granulat-korn nicht durchdringen konnte.

Ferner muss das Granulat häufig vor der Benutzung in einem Verbraucher wie einer Spritzgussmaschine getrocknet werden, um den Anteil der darin enthaltenen Feuchtigkeit vor allem soweit zu reduzieren, dass beim Spritzen hieraus keine durch Dampfbildung bedingten Hohlräume im Spritzteil entstehen. Sofern dies notwendig ist, ist der Trockner die letzte Aufbereitungsstation für das Granulat vor dem Verbraucher, und oft unmittelbar auf dem Granulat-Einlass des Verbrauchers montiert. Je nachdem, ob ein Trocknen des Granulates notwendig ist oder nicht, wird der Entstauber entweder auf dem Trockner montiert oder direkt auf dem Granulat-Einlass des Verbrauchers.

DE 10 2016 119827 A1 offenbart ein Entstaubungssystem, dessen Komponenten einen Baukasten mit den Merkmalen des Oberbegriffs von Anspruch 1 umfassen.

EP 2 711 097 A1 offenbart eine Behandlungseinheit für Granulat mit:
a) einer Verschlusseinheit für einen hindurch strömenden Granulat-Strom, mit
   - einem Gehäuse,
   - einer Granulat-Einlassöffnung für das Granulat im oberen Teil des Gehäuses,
   - eine Granulat-Auslassöffnung im unteren Teil des Gehäuses,
   - einem Verschluss-Element im Gehäuse, das so ausgebildet ist, dass es eine Granulat-Durchflussöffnung, insbesondere eine Granulat-Auslassöffnung eines darüber befindlichen Bauteiles von deren Unterseite aus verschließen kann,
b) einem Entstauber zum Entstauben eines Granulates, mit:
   - einem Entstaubungsbehälter, der aufweist:
      -- mindestens eine Granulat-Einlassöffnung für das Granulat,
      -- eine Granulat-Auslassöffnung im unteren Teil des Entstaubungsbehälters, insbesondere in dessen Boden, und
      -- eine Luft-Auslassöffnung, die insbesondere im oberen Teil des Entstaubungsbehälters angeordnet ist,
   - einem lonisator,
   - einer Aufwirbelungs-Einheit zum Aufwirbeln des Granulates im Entstaubungsbehälter,
c) einer Steuerung, die in der Lage ist, alle relevanten Komponente der Behandlungseinheit zu steuern,
d) einem Granulat-Trockner.

US 2734782 A beschreibt einen Tank für Pulver oder Granulat, bei dem im unteren Bereich des Tanks Druckluft eingebracht wird, um ein Abfließen des Pulvers oder Granulats aus dem Tank durch einen Auslass nach unten zu erleichtern.

DE 342 197 C, EP 0 166 959 A2, EP 0 117 397 A1, DE 20 41 230 A1 und US 2015/151229 A1 zeigen Verschlusseinheiten mit einem kegelförmigen, von unten nach oben weisenden, Verschlusselement, welches jedoch dort nicht um eine oder mehrere horizontale Achsen schwenkbar befestigt ist. Die Druckschrift WO9002643A1 zeigt eine Zufuhrvorrichtung für Schüttgut mit einem kegeligen Stau- und Stützkörper.

Weiterhin sind aus US 3799367 A, CN 206857425 U sowie JP S4719974 U Einlassventile in der Bauform mit einem schwenkbaren, kegelförmigen Ventilkörper bekannt, die jedoch für andere Anwendungen vorgesehen sind, im Fall der JP-Schrift für einen Staub-Sammelbehälter, im Fall der US-Schrift für einen Hochofen zum Aufschmelzen von Eisen und die CN-Schrift für einen Silo, über dessen weitere Gestaltungsmerkmale wie Verbindungselemente zu vor- und nachgelagerten Einheiten oder die Art der Entleerung nichts beschrieben ist.

### III. Darstellung der Erfindung

### a) Technische Aufgabe

Es ist daher die Aufgabe gemäß der Erfindung, einen Baukasten mit mehreren Modulen zum Erstellen einer Behandlungseinheit zur Verfügung zu stellen, die es ermöglichen, je nach Anwendungsfall und gewünschter Betriebsweise der Behandlungseinheit stromaufwärts eines Verbrauchers diese Behandlungseinheit individuell auf einfache Weise und aus wenigen Modulen und somit mit geringem Lagerbestand beim Hersteller konfigurieren und auf einfache Art und Weise zusammenzusetzen und montieren zu können.

### b) Lösung der Aufgabe

Diese Aufgabe wird durch die Merkmale der Ansprüche 1 gelöst. Vorteilhafte Ausführungsformen ergeben sich aus den Unteransprüchen.

Je nach Art der Vorbehandlung und/oder Nachbehandlung des Granulates muss die Granulat-Auslassöffnung des Entstaubers verschließbar sein oder nicht, beispielsweise um diesen im einen Fall kontinuierlich und im anderen Fall chargenweise betreiben zu können.

Dabei hat sich herausgestellt, dass es nicht optimal ist, an der Granulat-Auslassöffnung immer ein in den Entstauber integriertes Verschlusselement einzubauen und dies einfach offen zu lassen, wenn die gewünschte Art der Betriebsweise der Behandlungseinheit eine dauerhaft offene Granulat- Auslassöffnung des Entstaubers erfordert.

Erfindungsgemäß umfasst der Baukasten, ein Verschlusselement für die Granulat-Auslassöffnung des Entstaubers in Form einer separaten, unter dem Entstauber montierbaren oder auch an anderer Stelle einsetzbaren, Verschlusseinheit, was weitere Vorteile hat, beispielsweise weil das Gehäuse der Verschlusseinheit einen zusätzlichen Zwischenbehälter für Granulat darstellt, und auch hinsichtlich einer einfacheren Wartung und Reparatur der gesamten Behandlungseinheit.

Um je nach Anwendungsfall und gewünschter Betriebsweise der Behandlungseinheit diese individuell auf einfache Weise und aus wenigen Modulen und somit mit geringem Lagerbestand beim Hersteller konfigurieren zu können, wird erfindungsgemäß ein Baukasten vorgeschlagen, der die benötigten Module enthält, die für die freie wechselseitige Kombinierbarkeit spezifisch ausgestaltet sind.

Dies bedeutet, dass die einzelnen Module, und deren Verbindungselemente zum gegenseitigen Verbinden, spezifisch so ausgestaltet sind, dass die Module schnell und einfach aneinander, insbesondere aufeinander, so befestigt werden können, dass sie in diesem montierten Zustand als Behandlungseinheit zusammenwirken können, also insbesondere die untere Granulat-Auslassöffnung eines oberen Moduls mit der oberen Granulat-Einlassöffnung eines darunter montierten Moduls überlappt, insbesondere zueinander fluchten, wobei Anzahl und Reihenfolge der Module für die Behandlungseinheit frei wählbar sind je nach Anwendungsfall, wobei wahlweise zumindest jede der folgenden drei Montagekonfigurationen ermöglicht wird:
• Entstauber auf Verschlusseinheit, diese gegebenenfalls auf einem Trockner oder
• Entstauber auf Trockner oder
• Trockner auf Verschlusseinheit,
wobei eine solche Behandlungseinheit auf einem Verbraucher montiert werden kann.

Der Entstauber weist dabei - wie bekannt - einen Entstaubungsbehälter mit mindestens einer Granulat-Einlassöffnung und einer Granulat-Auslassöffnung auf sowie darüber hinaus einer Luft-Auslassöffnung zum Entfernen, insbesondere Absaugen, der Luft zusammen mit dem zu entfernenden Staub.

Falls - wie bekannt - das Granulat mittels eines Förder-Luftstromes zum Entstauber herantransportiert werden soll, wird ein Förderstrom-Erzeuger, insbesondere in Form einer Ejektor-Druckluftdüse mit einem Druckluftanschluss, benötigt, der ebenfalls ein Modul des Baukastens bilden kann.

Die Granulat-Einlassöffnung und/oder die Luft-Auslassöffnung wird sich vorzugsweise im oberen Bereich des Entstaubers, insbesondere in der oberen Hälfte oder im oberen Drittel, befinden, hiervon eine, insbesondere die Luft-Auslassöffnung, vorzugsweise im oberen Deckel des Entstaubungsbehälters.

Die Granulat-Auslassöffnung wird sich dagegen im unteren Bereich, insbesondere im unteren Drittel oder vorzugsweise im Boden des Entstaubungsbehälters befinden.

Des Weiteren umfasst ein bekannter Entstauber eine Aufwirbelungs-Einheit zum Aufwirbeln des Granulates im Entstaubungsbehälter durch Einschießen von Druckluft, sowie eine Steuerung, insbesondere eine elektronische Steuerung, die in der Lage ist, den gesamten Entstauber, insbesondere eine gesamte Behandlungseinheit, die einen solchen Entstauber umfasst, also insbesondere alle beweglichen Teile, insbesondere Ventile und/oder alle pneumatisch oder elektrisch oder elektronisch funktionierenden Teile davon, zu steuern.

Erfindungsgemäß umfasst der Entstauber jedoch kein aktivierbares und deaktivierbares Verschlusselement für die Granulat-Auslassöffnung.

Stattdessen umfasst der Entstauber Verbindungs-Elemente, insbesondere Verschraubungs-Öffnungen, im unteren Bereich zum - vorzugsweise direkten - Verbinden mit einem darunter angeordneten Bauteil, beispielsweise einer Verschlusseinheit, die die Granulat-Auslassöffnung des Entstaubers verschließen kann.

Eine separate Verschlusseinheit umfasst dementsprechend ein aktivierbares und deaktivierbares Verschlusselement an einer der Granulat-Öffnungen, insbesondere an seiner oberen Granulat-Einlassöffnung für den von dem stromaufwärtigen, vorgelagerten Modul -, insbesondere, aber nicht nur - einem von einem Entstauber her hindurch strömenden Granulat-Strom.

Die Verschlusseinheit umfasst außer einer Granulat-Einlassöffnung für das Granulat im oberen Teil des Gehäuses, insbesondere in dessen Deckelplatte eine Granulat-Auslassöffnung im unteren Teil des Gehäuses, sowie Verbindungs-Elemente, insbesondere Verschraubungs-Öffnungen, im oberen und unteren Bereich des Gehäuses, die so ausgebildet sind, dass sie zum schnellen und einfachen Verbinden mit einem darüber oder darunter angeordneten Bauteil benutzt werden können.

Das Verschluss-Element ist dabei im Gehäuse so ausgebildet und angeordnet, dass es eine im oberen Bereich der Verschlusseinheit oder über der Verschlusseinheit vorhandene Granulat-Durchlassöffnung verschließen kann, insbesondere von deren Unterseite aus verschließen kann.

Diese Granulat-Durchlassöffnung kann die eigene Granulat-Einlassöffnung der Verschlusseinheit in deren oberen Bereich sein. Diese Granulat-Einlassöffnung ist vorzugsweise in einer Deckelplatte ausgebildet, die auf einem hülsenförmigen Gehäuse-Teil der Verschlusseinheit, vorzugsweise demontierbar, angeordnet ist, beispielsweise um nach Bedarf Deckelplatten mit unterschiedlich großen Granulat-Einlassöffnungen montieren zu können.

Auf diese Weise kann die Granulat-Einlassöffnung der Verschlusseinheit angepasst werden an die Granulat-Auslassöffnung eines darüber angeordneten Moduls. Die beiden Öffnungen können beispielsweise gleich groß gewählt werden.

Die Granulat-Durchlassöffnung kann jedoch auch direkt die Granulat-Auslassöffnung eines darüber montierten Moduls wie etwa des Entstaubers sein, die das Verschlusselement verschließen kann. Dann ist unter Umständen die Deckelplatte an der Verschlusseinheit nicht notwendig und kann weggelassen werden.

Vorzugsweise ist das Verschluss-Element ein nach oben aufragendes Verschluss-Element wie etwa eine Verschluss-Halbkugel oder ein Verschluss-Kegel, das im verschließenden Zustand vorzugsweise durch die obere Granulat-Einlassöffnung der Verschlusseinheit nach oben hinausragt und in das unmittelbar darüber montierte Modul vorzugsweise hineinragt durch eine dortige zum Beispiel Granulat-Auslassöffnung.

Wenn das nach oben aufragende Verschlusselement wie etwa der Verschluss-Kegel nicht die Granulat-Einlassöffnung der Verschlusseinheit verschließen soll, sondern direkt diese Granulat-Auslassöffnung des darüber angeordneten Moduls, muss diese lediglich eine vorgegebene Kontur mit einem vorgegebenen Größenbereich besitzen, damit sie das nach oben aufragende Verschlusselement verschließen kann.

Dies erleichtert die Kombinierbarkeit mit verschiedenen aufgesetzten Modulen, die etwas unterschiedlich große zu verschließende Granulat-Öffnungen an ihrem unteren Ende besitzen.

Für eine dichte ringförmige Anlage ist das nach oben aufragende Verschlusselement, insbesondere der Verschluss-Kegel, schwenkbar um mindestens eine horizontale Achse, besser um zwei sich kreuzende horizontale Achsen, auf einer Verschlusselement-Basis befestigt.

Vorzugsweise weist das Gehäuse wenigstens eine Umfangswand auf, die das hülsenförmige Gehäuse-Teil bildet, sowie einen oberen und einen unteren, davon radial nach außen vorstehenden, Befestigungsflansch auf, was das Verbinden mit darüber und darunter angeordneten Bauteilen erleichtert.

Ferner ist vorzugsweise eine Luft-Öffnung im Gehäuse, insbesondere in dessen Umfangswand, vorhanden, an der ein Luft-Filter strömungstechnisch dicht befestigt ist, um hindurchströmenden Luft zu filtern. Dadurch kann beispielsweise ein Gas, vorzugsweise Luft, welches aus dem darüber oder darunter angeordneten Modul, beispielsweise einem darunter angeordneten Granulat-Trockner, in die Verschlusseinheit gelangt, abfließen, so dass die Luft-Öffnung dann als Luft-Auslassöffnung fungiert.

Ebenso könnte Umgebungsluft in die Verschlusseinheit und von dort in ein darunter montiertes Modul und/oder bei geöffnetem Verschlusselement in das darüber montierte Modul einströmen, falls dies für die Betriebsweise dieses angrenzenden Moduls notwendig ist.

In aller Regel besitzt die Verschlusseinheit auch eine eigene, vorzugsweise elektronische, Steuerung, die das Verschlusselement steuert. Diese Steuerung besitzt Signal-Anschlüsse - insbesondere in Form einer Stecker/Buchse Verbindungen oder als Klemme, insbesondere Schraubklemme - zum Verbinden insbesondere mit einer anderen Steuerung, beispielsweise mit der Steuerung des Entstaubers, wobei dann diese andere Steuerung als Mastersteuerung fungieren kann.

Die Steuerung der Verschlusseinheit und/oder des Entstaubers kann auch eine Mühlensteuerung umfassen:
Falls die Behandlungseinheit eine Spritzguss-Maschine als Verbraucher mit Granulat versorgt, sollen die an der Spritzguss-Maschine anfallenden Abfall-Produkte dem Verbraucher und zuvor der Behandlungseinheit wieder zugeführt werden.

Bei den Abfallprodukten handelt es sich vor allem um Anguss-Teile oder Ausschuss-Produkte. Diese werden in eine Mühle eingegeben, um sie auf eine Größe zu mahlen die nicht wesentlich größer ist als die Größe der Granulat-Körner, um sie über die Granulat-Einlassöffnung dem Entstauber wieder zuführen zu können.

Die Mühlen-Steuerung enthält eine Eingabe-Möglichkeit für die Länge des Zeitintervalls, in dem die Mühle entleert und die gemahlenen Abfall-Produkte dem Granulat-Einlass des Entstaubers wieder zugeführt werden sollen, insbesondere damit das in der Mühle befindliche Mahlgut nicht zu fein aufgemahlen wird.

Die Mühlensteuerung kann auch ein Betätigungselement zum sofortigen, einmaligen Entleeren der Mühle aufweisen. Das Betätigungselement als auch die Eingabe-Möglichkeit sind vorzugsweise am Gehäuse der Steuerung der Verschlusseinheit vorhanden.

Der Baukasten weist als weitere Baugruppe auch den erwähnten Granulat-Trockner auf.

Dieser besitzt in der Regel ein etwa zylindrisches, aufrecht stehendes, etwa hülsen-förmiges, Gehäuse mit einer oberen Granulat-Einlassöffnung und einer unteren Granulat-Auslassöffnung, sowie eine Einströmöffnung im unteren Bereich, über die warme und/oder trockene Trocknungsluft eingebracht werden kann, um durch das Granulat im Inneren des Granulat-Trockners zu strömen und dieses zu trocknen. Die untere Granulat-Auslassöffnung ist dabei meist durch ein ansteuerbares Verschlusselement direkt oder indirekt verschließbar.

In der Regel sind Auslassöffnung einerseits und Einlassöffnung andererseits in der unteren und in der oberen Stirnseite angeordnet.

Falls der Granulat-Trockner direkt unter der Verschlusseinheit montiert ist, liegt im montierten Zustand die Granulat-Auslassöffnung der Verschlusseinheit in der Aufsicht betrachtet vollständig innerhalb der Granulat-Einlassöffnung des Trockners, insbesondere sollten beide konzentrisch zueinander liegen oder identisch sein.

Auch bei dem Granulat-Trockner sind an dem Gehäuse Verbindungselemente sowohl am oberen als auch am unteren Ende vorhanden, die zum einfachen und schnellen Verbinden mit einem darauf aufsitzenden oder einem darunter nachfolgenden Modul ausgebildet sind. Die oberen Verbindungselemente, insbesondere in Form von Verschraubungsöffnungen, sollten dabei so angeordnet sein, dass die oben beschriebene Überlappung oder Deckung der Öffnungen bei einem darauf sitzenden anderen Modul gegeben ist.

Die unteren Verbindungselemente sollten vorzugsweise möglichst universell ausgestaltet sein, da ein Granulat-Trockner häufig direkt auf einem Verbraucher aufgesetzt und befestigt werden muss, von denen es jedoch eine große Vielzahl gibt, die wahrscheinlich nicht alle mit einer einzigen universellen Ausgestaltung der unteren Verbindungselemente befestigt werden können.

Dann ist ein Adapter mit möglichst geringer axialer Höhe, insbesondere ein plattenförmiger, insbesondere ringförmiger Adapter, zwischen dem untersten Modul einer Behandlungseinheit, beispielsweise dem Granulat-Trockner, und dem Verbraucher sinnvoll, welcher seinerseits zwei Sorten von Verbindungselementen aufweist, von denen die eine Sorte mit den Verbindungselementen des darauf aufsitzenden Moduls und die andere Sorte mit den Verbindungselementen des darunter folgenden Verbrauchers zusammenwirken kann. Die zwei verschiedenen Sorten von Verbindungselementen können sich auch lediglich durch ihre Position am oder im Adapter unterscheiden.

Der Adapter kann auch dafür genutzt werden, um zwischen zwei Modulen der Behandlungseinheit eingesetzt zu werden, im Rahmen eines Baukastens, bei dem alle Module des Baukastens vom Anbieter des Baukastens selbst stammen, sollte ein Adapter zwischen den Modulen jedoch nicht notwendig sein.

Der Baukasten kann ferner weiterhin einen Zwischenbehälter aufweisen, der im Wesentlichen nur aus einem vertikal durchgehend offenen z.B. konusförmigen oder hülsenförmigen Gehäuse besteht mit Verbindungselementen im oberen und unteren Bereich zum Verbinden mit einem darüber oder darunter angeordneten Bauteil, beispielsweise einem Modul des Baukastens oder einem darunter angeordneten Verbraucher.

Der Zweck eines solchen Zwischenbehälters ist die Zurverfügungstellung des Innenraumes als zusätzlichen Pufferraum für Granulat, was beispielsweise für einen nachgeordneten, darunter folgenden Einlaufschacht einer Spritzguss-Maschine notwendig sein kann, insbesondere wenn die gesamte Behandlung-Einheit keine Verschlusseinheit umfasst.

Einen solchen Pufferraum enthält natürlich auch die Verschlusseinheit, die jedoch im Rahmen der vorliegenden Beschreibung nicht unter einem Zwischenbehälter zu verstehen ist. Unter einem Zwischenbehälter sollen nur solche verstanden werden, die kein Verschlusselement in ihrem oberen Bereich aufweisen, insbesondere überhaupt kein Verschlusselement aufweisen.

Der Baukasten kann ferner als weiteres Modul einen Förderstrom-Erzeuger aufweisen, der insbesondere an der Granulat-Einlassöffnung des Entstaubers angeschlossen werden kann, und einen Luft-Förderstrom erzeugt, um darin mitfliegendes Granulat zu transportieren und in den Entstauber einzubringen.

Ein solcher Fördererstrom-Erzeuger kann insbesondere eine mittels Druckluft betriebene Ejektor-Druckluftdüse sein, die dementsprechend über einen Druckluftanschluss verfügen muss, und insbesondere in einer Sauglanze angeordnet sein kann, die in einen Granulat-Vorrat eingesteckt werden kann, um daraus Granulat anzusaugen.

Der Baukasten kann als weiteres Modul auch einen Staubabscheider umfassen, wie er zum Abscheiden des Staubes aus der den Entstauber verlassenden Abluft eingesetzt werden kann und dementsprechend an die Luft-Auslassöffnung des Entstaubers angeschlossen werden kann.

Ein solcher Staubabscheider kann insbesondere einen Abluft-Filter umfassen.

Ein solcher Staubabscheider kann auch einen eigenen Unterdruck-Erzeuger aufweisen, um die staubbeladene Luft zum Staubabscheider zu transportieren, beispielsweise wiederum eine druckluftbetriebene Ejektor-Druckluftdüse.

Eine solche Ejektor-Druckluftdüse schießt die anliegende Druckluft mit hoher Strömungsgeschwindigkeit zum Beispiel in eine Förderleitung ein, wodurch Umgebungsluft durch den entstehenden Unterdruck angesaugt wird und im Zulauf vorhandenes Granulat ebenfalls mitreißt und mit transportiert.

### c) Ausführungsbeispiele

Eine Ausführungsform einer aus Modulen des erfindungsgemäßen Baukastens zusammengesetzten Behandlungseinheit sowie deren Module zum Abtrennen eines Granulates aus der Förderluft sowie Entstauben des Granulates gemäß der Erfindung wird im Folgenden beispielhaft anhand der Figuren in verschiedenen Funktionszuständen beschrieben. Es zeigen:
- **Figur 1a, b:**: eine Verschlusseinheit mit geschlossener Granulat-Einlassöffnung im Vertikalschnitt sowie in der Aufsicht von oben,
- **Figur 1c:**: die Verschlusseinheit gemäß Figur 1a, b wiederum im Vertikalschnitt mit geöffneter Granulat-Einlassöffnung,
- **Figur 2a:**: eine Behandlungs-Einheit aus einem auf der Verschlusseinheit montierten Entstauber mit geschlossener Granulat-Einlassöffnung der Verschlusseinheit,
- **Figur 2b:**: die Behandlungs-Einheit gemäß Figur 2a mit offener Granulat-Einlassöffnung der Verschlusseinheit,
- **Figur 3a:**: eine Behandlungs-Einheit aus einem auf der Verschlusseinheit montierten Entstauber sowie darunter montiertem Granulat-Trockner, der auf einem davon stromabwärtigen Verbraucher montiert ist, wobei die Granulat-Einlassöffnung der Verschlusseinheit geschlossen ist,
- **Figur 3b:**: die Behandlungs-Einheit gemäß Figur 3a mit offener Granulat-Einlassöffnung der Verschlusseinheit, jedoch einem zusätzlichen Adapter zwischen Granulat-Trockner und Verbraucher,
- **Figur 4a:**: eine Behandlungs-Einheit bestehend nur aus einem Entstauber, der auf einem darunter angeordneten Verbraucher montiert ist,
- **Figur 4b:**: eine Behandlungs-Einheit gemäß Figur 4a, jedoch mit einem zusätzlichen Zwischenbehälter zwischen Entstauber und Verbraucher,
- **Figur 4c:**: eine Behandlungs-Einheit gemäß Figur 4b, jedoch mit Verschlusseinheit zwischen Entstauber und Zwischenbehälter.

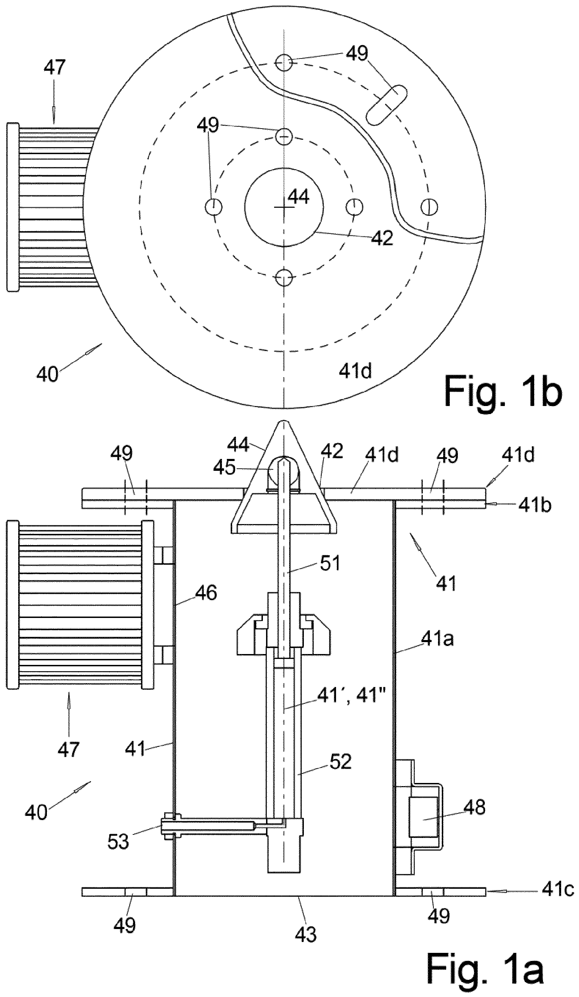

Die **Figuren 1a** **bis** c zeigen die Verschlusseinheit 40 als Einzelteil:
Das Gehäuse 41 der Verschlusseinheit 40 umfasst betrachtet in Axialrichtung 41', in der Regel im montierten Zustand der Vertikalen, eine umlaufende, polygone, insbesondere rechteckige, oder rotationssymmetrische Umfangswand 41a, die einen oben und unten offenen Innenraum umgibt, und von deren oberen Ende ein ringförmiger, oberer Befestigungsflansch 41b nach außen vorsteht und von dessen unteren Ende ein ringförmiger, unterer, insbesondere zum oberen identischer, Befestigungsflansch 41c nach außen vorsteht.

Auf dem oberen Befestigungsflansch 41b liegt eine Deckelplatte 41d - die auch gleichzeitig der Befestigungsflansch 41b sein könnte - auf und ist mit dieser lösbar verbunden, vorzugsweise verschraubt, in der, vorzugsweise zentrisch, eine Granulat-Einlassöffnung 42 ausgebildet ist, die deutlich kleiner ist, etwa die Hälfte des Durchmessers besitzt, wie der innere freie Durchmesser der Umfangswand 41a.

Durch die demontierbare Deckelplatte 41b können wahlweise Deckelplatten mit unterschiedlich großer Granulat-Einlassöffnung 42 verwendet werden. Das Verschrauben gegenüber dem restlichen Gehäuse der Verschlusseinheit 40 erfolgt vorzugsweise zusammen mit dem Verschrauben der Verschlusseinheit 40 gegenüber einem darüber angeordneten Modul, weshalb als Verbindungselemente in diesem Fall Durchgangsöffnungen 49 sowohl in dem Befestigungsflansch 41b als auch der Deckelplatte 41 b an zueinander fluchtenden Positionen und insbesondere gleich groß vorgesehen sind.

Die untere Granulat-Auslassöffnung 43 ist das untere Ende des durch die Umfangswand 41a umschlossenen Innenraumes.

An der Umfangswand 41a rechts ist im unteren Bereich ein Füllstands-Sensor 48 dargestellt, der durch die Umfangswand 41a hindurch einen eventuell in dem Gehäuse 41 vorhandenen Füllstand an Granulat misst.

An der Umfangswand 41a auf der linken Seite im oberen Bereich ist ein Luft-Filter 47 dargestellt, der an einer Luft-Öffnung 46 in der Umfangswand 41a dicht angebaut ist, und durch den ein Gas, insbesondere Luft, die aus dem Gehäuse 41 ausströmt oder in das Gehäuse 41 einströmt, gefiltert wird.

Das Verschlusselement 44 hat die Form eines Verschluss-Kegels 44, der im Gehäuse 41 angeordnet und entlang deren axialer Richtung 41', in der Regel der Vertikalen, verstellbar ist:
Da der insbesondere rotationssymmetrische Verschluss-Kegel 44, der mit der Spitze nach oben weist, in der Aufsicht betrachtet einen größeren Durchmesser besitzt als die runde Granulat-Einlassöffnung 42 in der Deckelplatte 41d, verschließt gemäß **Figur 1a** der Verschluss-Kegel 44 diese Granulat-Einlassöffnung 42, wenn er sich so weit oben befindet, dass seine Spitze nach oben aus der Granulat-Einlassöffnung 42 vorsteht und seine Kegelfläche an der Innenumfangsfläche der Granulat-Einlassöffnung 42 dicht anliegt, deren untere umlaufende Kante zu diesem Zweck vorzugsweise leicht angeschrägt sein kann.

Um eine solche dichte Anlage bei entsprechender Höhenlage des Verschluss-Kegels 44 sicherzustellen, ist dieser um alle horizontalen, also quer zur axialen Richtung 41', verlaufenden Richtungen schwenkbar, insbesondere indem er mit einer nach unten offenen Ausnehmung, die einen etwa halbkugelförmigen, dementsprechend nach oben weisenden, Boden besitzt, auf einer in diese Ausnehmung passenden Kugel 45 mit analogem Radius wie deren Boden aufsitzt, die die Kegel-Basis 45 bildet.

Die Kugel 45 ist vorzugsweise auf dem oberen Ende einer aus einem Pneumatik-Zylinder 50 vorstehenden Kolbenstange 51, die im Zylinder 52 dicht verschiebbar ist, befestigt, der in der axialen Richtung 41' verläuft und im Gehäuse 41 unter dem Verschluss-Kegel 44 angeordnet ist, und mit einem Druckluftanschluss 53 in der Umfangswand 41a des Gehäuses in Verbindung steht.

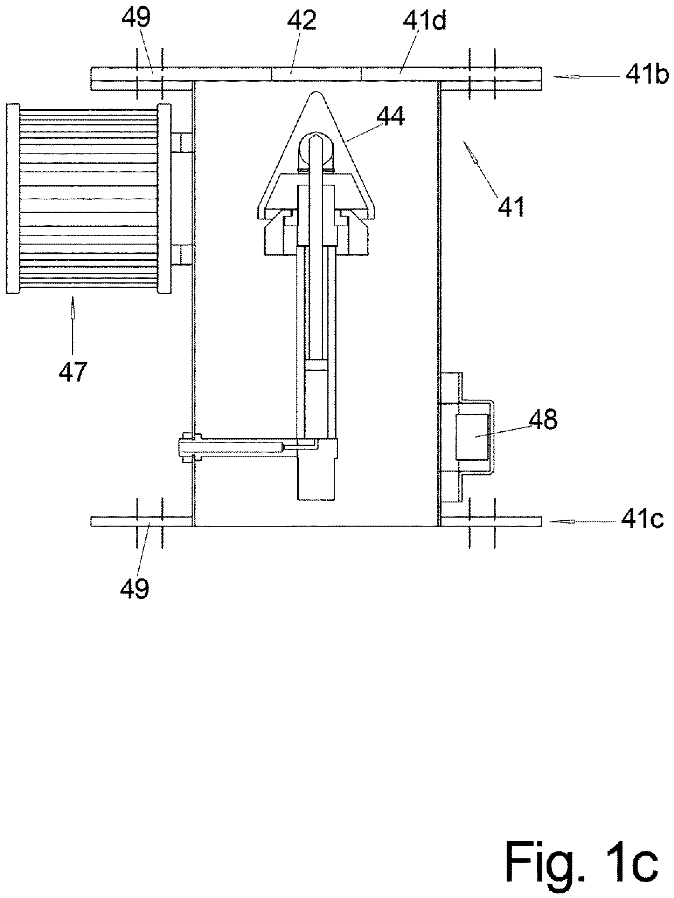

Durch Beaufschlagen mit Druckluft wird die Kolbenstange 51 und somit der Verschluss-Kegel 44 nach oben bis zur Anlage an der Granulat-Einlassöffnung 42 gebracht, und durch Entlüftung sinkt diese schwerkraftbedingt nach unten in die geöffnete Stellung, in der sich vorzugsweise auch die nach oben weisende Spitze des Verschluss-Kegels 44 innerhalb des Gehäuses 41 befindet, wie in **Figur 1c** dargestellt.

Durch die Ausbildung des Verschluss-Elementes 44 mit nach oben gerichteter Spitze, also insbesondere als Kegel, wird verhindert, dass sich vor allem im geöffneten Zustand Granulat auf der Oberfläche des Verschlusselementes 44 ansammelt.

In den Befestigungsflanschen 41b, c sind mehrere sich vertikal erstreckende Durchgangsöffnungen 49 als Verbindungselemente 49 über den Umfang verteilt angeordnet, insbesondere alle auf dem gleichen Kreis, der insbesondere konzentrisch um die Längsmitte 41" des Gehäuses 41 herum angeordnet ist.

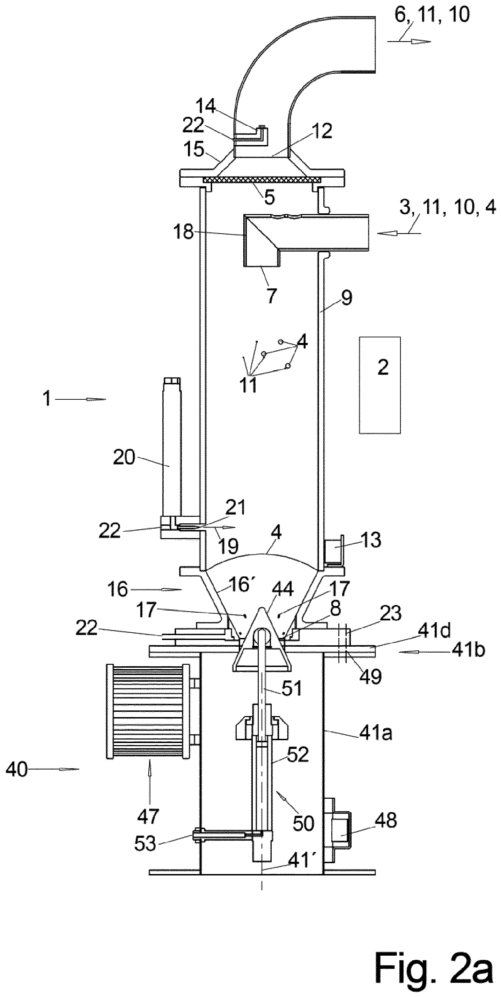

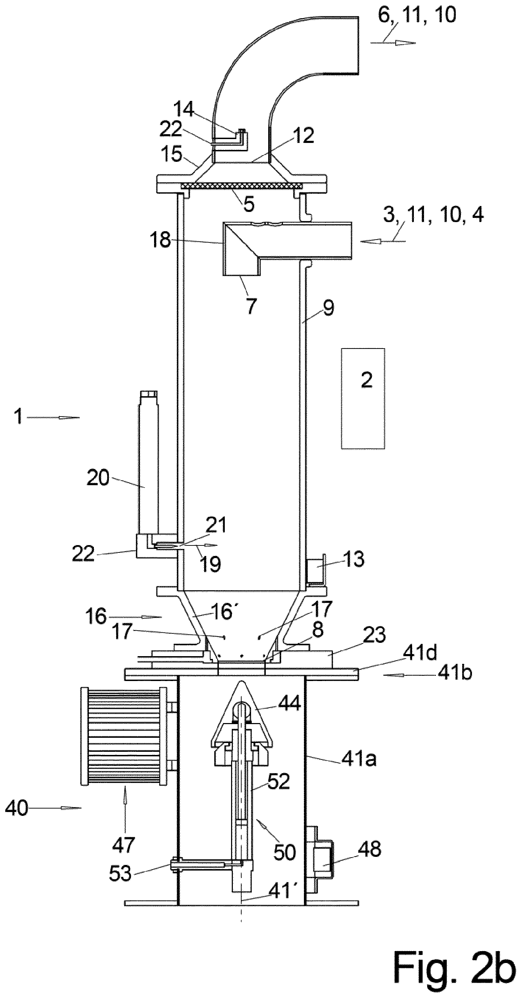

Die **Figuren 2a****,** **b** zeigen die Verschlusseinheit 40 montiert - entsprechend der schwerkraftbedingten Durchflussrichtung 10 des Granulats 4 - unter einem Granulat-Abscheider und Entstauber 1, so dass das Granulat 4 aus der Granulat-Auslassöffnung 8 des Entstaubers 1 und die unmittelbar darunter angeordnete, in diesem Fall auch gleich große, in aller Regel in der Aufsicht betrachtet kreisrunde, Granulat-Einlassöffnung 42 der Verschlusseinheit 40 in das Innere des Gehäuses 41 der Verschlusseinheit 40 hinein fallen kann, wenn diese Öffnung 8 bzw. 42 offen ist, wie in **Figur 2b** dargestellt.

Einen Verschluss hierfür besitzt nur die Verschlusseinheit 40, nicht dagegen der Entstauber 1.

Der Verschlusskegel 44 der Verschlusseinheit 40 befindet sich dabei im geöffneten Zustand vollständig unterhalb dieser Öffnungen und damit vollständig im Höhenbereich der Umfangswand 41a, sodass die in die Verschlusseinheit 40 hineinfallenden Granulatkörner 4 auf die Spitze oder die Kegelflächen des Verschluss-Kegels 44 fallen und von dort weiter nach unten rutschen.

Wie besser in **Figur 2a** zu erkennen - in der der Verschluss-Kegel 44 soweit hochgefahren ist, dass er die Granulat-Einlassöffnung 42 der Verschlusseinheit 40 und damit den Durchlass zwischen Entstauber 1 und Verschlusseinheit 40 verschließt - umfasst der Entstauber 1 zunächst einen Entstaubungsbehälter 9 in Form eines aufrecht stehenden Zylinders, der meist aus Glas besteht, der oben und unten durch entsprechende Teile, die meist aus Metall bestehen, verschlossen ist.

In dem Entstaubungsbehälter 9 mündet im oberen Bereich der von der Seite hindurch geführte und mit seinem freien Ende nach unten gekröpfte Einlassstutzen 18, dessen freie Öffnung die Granulat-Einlassöffnung 7 des Entstaubers 1 ist, durch die die Förderluft 3 einschließlich des von ihr geförderten Granulates 4, aber auch des darin enthaltenen Staubes 11, in Strömungsrichtung 10 zugeführt wird.

Im unteren Bereich befindet sich in dem Entstaubungsbehälter 9, also in dessen Wandung, eine Gas-Zufuhröffnung 21, durch die hindurch ionisiertes Gas 19 zugeführt wird. Dabei handelt es sich meist um Luft, welche über einen Druckluftanschluss 22 zugeführt wird und entlang einer lonisierspitze strömt, die Bestandteil eines außen am Entstaubungsbehälters 9 angeordneten Ionisators 20 ist.

Ebenfalls im unteren Bereich ist außen an der Wandung des Entstaubungsbehälters 9 ein Füllstandssensor 13 angeordnet, der ein Signal abgibt, sobald sich von unten her eine Schüttung aus Granulat 4 soweit aufgebaut hat, dass sie den Füllstandssensor 13 erreicht.

An das untere offene Ende des Glaszylinders, der den Entstaubungsbehälter 9 bildet, schließt sich dicht der Auslass-Konus 16 an, in dessen innerer, sich von oben nach unten enger werdenden, Konusfläche 16' die Mündungen von so genannten Aufwirbelungs-Düsen 17 münden, in die über einen Druckluft-Anschluss 22 Druckluft zum Aufwirbeln eines im unteren Bereich des Entstaubungsbehälters 9 liegenden Granulates 4 eingeschossen werden kann.

Die Aufwirbelungs-Düsen sind vorzugsweise nach oben gerichtet, also unter einem Winkel, der von der Vertikalen um höchstens 45°, besser höchstens 30°, besser höchstens 20°, besser höchstens 10° abweicht, um das Anprallen der Granulat-Körner an den Seitenwänden des Entstaubers möglichst zu vermeiden.

Am oberen Ende ist die obere Luft-Auslassöffnung 12 des Entstaubungsbehälters 9 von einem Deckel 15, in dem sich ein Sieb 5 befindet, verschlossen, welches zwar von Luft und Staub 11 durchdrungen werden kann, nicht aber von den Körnern des Granulates 4. An diese Luft-Auslassöffnung 12 schließt sich ein Stutzen zum Abführen der mit Staub 11 beladenen Abluft 6 an, die durch das Sieb 5 abgesaugt wird mittels eines Unterdruckes, der durch eine stromabwärts des Siebes 5 in dem Stutzen angeordnete Ejektor-Druckluftdüse 14 als Unterdruckerzeuger erzeugt wird, mit Druckluft versorgt wiederum über einen Druckluft-Anschluss 22.

Die staubbeladene Abluft 6 wird einem nicht dargestellten Staubsammelbehälter und einem dortigen Filter als Staubabscheider zugeführt.

Alle beweglichen Teile sowie alle Ventile und/oder Düsen des Entstaubers und insbesondere der gesamten Behandlungseinheit werden von einer elektrischen Steuerung 2 gesteuert.

Vom unteren Ende des Auslass-Konus 16 steht ein ringförmiger, plattenförmiger Flansch nach außen vor, der auf die Deckelplatte 41d der Verschlusseinheit 40 aufgesetzt ist.

Darin befinden sich Durchgangsöffnungen 23 als Verbindungselemente 23 des Entstaubers 1, vorzugsweise in gleicher Umfangsposition und Radialposition wie die Durchgangsöffnungen 49 als Verbindungselemente 49 oben in der Verschlusseinheit 40, sodass durch beide Schrauben hindurchgesteckt und die beiden Module miteinander dicht verbunden werden können.

Solche Verbindungselemente 23 / 49 des Entstaubers 1 einerseits und/oder der Verschlusseinheit 40 andererseits können unterschiedlich gestaltet sein oder auf unterschiedlichen radialen Positionen oder Umfangspositionen liegen und somit zwei verschiedene Sorten von Verbindungselemente darstellen, wie beispielhaft in **Figur 1b** auf zwei unterschiedlichen konzentrischen Kreisen liegend eingezeichnet oder in der Form eines Langloches, sei es wie dargestellt radial verlaufend oder auch in Umfangsrichtung verlaufend.

Auf diese Art und Weise kann die Granulat-Auslassöffnung 8 des Entstaubers 1 verschlossen werden, bis über die Granulat-Einlassöffnung 7 eine Charge 4' des Granulates 4 eingefüllt ist, und die Granulat-Zufuhr gestoppt wird, sobald der Füllstandssensor 13 ein entsprechendes Signal abgibt und anschließend diese Charge durch Hochwirbeln über eine definierte Zeit und mit definiertem Druck und Volumenstrom aus den Aufwirbelungsdüsen 17 bei gleichzeitig anliegendem Unterdruck an der oberen Luft-Auslassöffnung 12 das Granulates 4 chargenweise entstaubt wird.

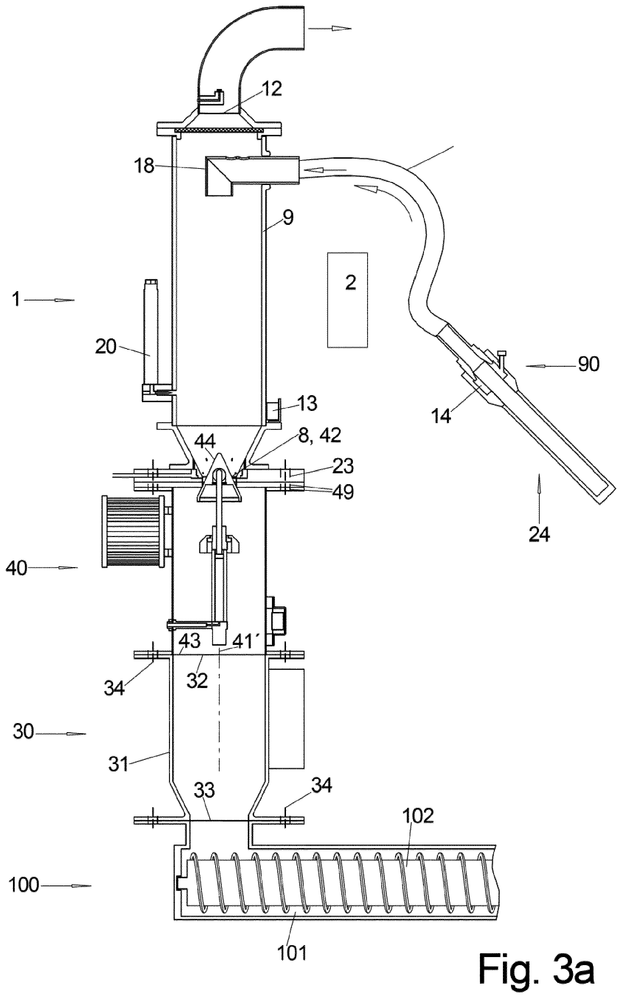

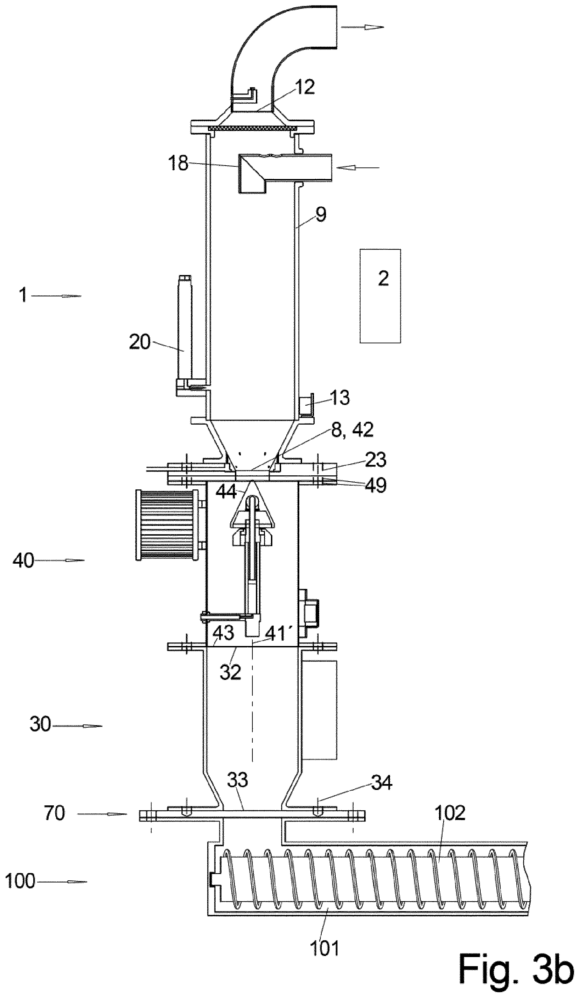

Die **Figuren 3a****,** **b** zeigen eine Behandlungseinheit, die außer dem Entstauber 1 und der darunter montierten Verschlusseinheit 40 - wie in den Figuren 2a, b dargestellt - weiterhin einen Granulat-Trockner 30 umfasst, der unter der Verschlusseinheit 40 montiert ist.

Diese gesamte Behandlungseinheit ist auf einem Verbraucher 100 - hier dem Einlass in seinen Förderkanal 101, in dem sich eine Förderschnecke 102 befindet - montiert, sodass das im Entstauber 1 aus dem Luft-Strom abgetrennte und entstaubte Granulat schwerkraftbedingt zunächst in die Verschlusseinheit 40 fällt - wenn der Durchlass dazwischen von dem Verschlusselement 44 freigegeben ist wie in **Figur 3b** dargestellt - und von dort weiter in den Granulat-Trockner 30 und den Verbraucher 100.

Von dem Granulat-Trockner 30 ist lediglich das hülsenförmige Gehäuse 31 mit der oberen Granulat-Einlassöffnung 32 - die in diesem Fall identisch mit der Granulat-Auslassöffnung 43 der darüber befindlichen Verschlusseinheit 40 ist - und der unteren Granulat-Auslassöffnung 33 sowie die sich auch hier vom oberen und unteren Ende des hülsenförmigen Gehäuses 31 jeweils nach radial außen erstreckenden ringförmigen Befestigungsflansche dargestellt, in denen sich Verbindungselemente 34, hier wiederum in Form von Verschraubungsöffnungen 34, zum Verbinden mit darüber und darunter angeordneten Modulen befinden.

Während in **Figur 3a** die Verschraubungsöffnungen 34 im unteren Befestigungsflansch mit Verschraubungsöffnungen im darunter angeordneten Verbraucher 100 fluchten, ist dies in der Darstellung der **Figur 3b** nicht der Fall, sondern die Verschraubungsöffnungen des Verbrauchers liegen auf einem Kreis mit größerem Durchmesser als die des Granulat-Trockners 30 und gegebenenfalls auch an anderen Umfangspositionen.

Deshalb ist in **Figur 3b** zwischen dem Granulattrockner 30 und dem Verbraucher 100 ein, insbesondere ringförmiger, Adapter 70 angeordnet, der Verschraubungsöffnungen passend zu sowohl dem darüber als auch dem darunter zu verschraubenden Bauteil aufweist:
Passend zu den Verschraubungsöffnungen des Verbrauchers 100 sind in diesem Adapter 70 vorzugsweise Verschraubungsöffnungen in gleicher Umfangsposition und gleichen Radius angeordnet, vorzugsweise als Durchgangsöffnungen ohne Gewinde.

Passend zu den unteren Verschraubungsöffnungen 34 des Granulat-Trockners 30 sind in dem Adapter 70 vorzugsweise nach oben offene Gewinde-Sacklöcher angeordnet, also an gleicher Umfangsposition und in gleicher radialen Position sowie in einer Größe, sodass Schrauben durch die Verschraubungsöffnungen 34 des Granulat-Trockners 30 hindurch gesteckt und in dem Gewinde-Sackloch das Adapters 70 verschraubt werden können.

In **Figur 3a** ist ferner eine Sauglanze 24 dargestellt, angeschlossen an den Granulat-Einlassstutzen 18, in der ein Förderstrom-Erzeuger 90 in Form einer Ejektor-Druckluftdüse 14 angeordnet ist, um damit aus einem - nicht dargestellten - Granulat-Vorrat Granulat 4 ansaugen zu können.

Analog zu den Figuren 2a, b ist auch in den **Figuren 3a****,** **b** die Verschlusseinheit 40 in **Figur 3a** im geschlossenen und in **Figur 3b** im geöffneten Zustand dargestellt.

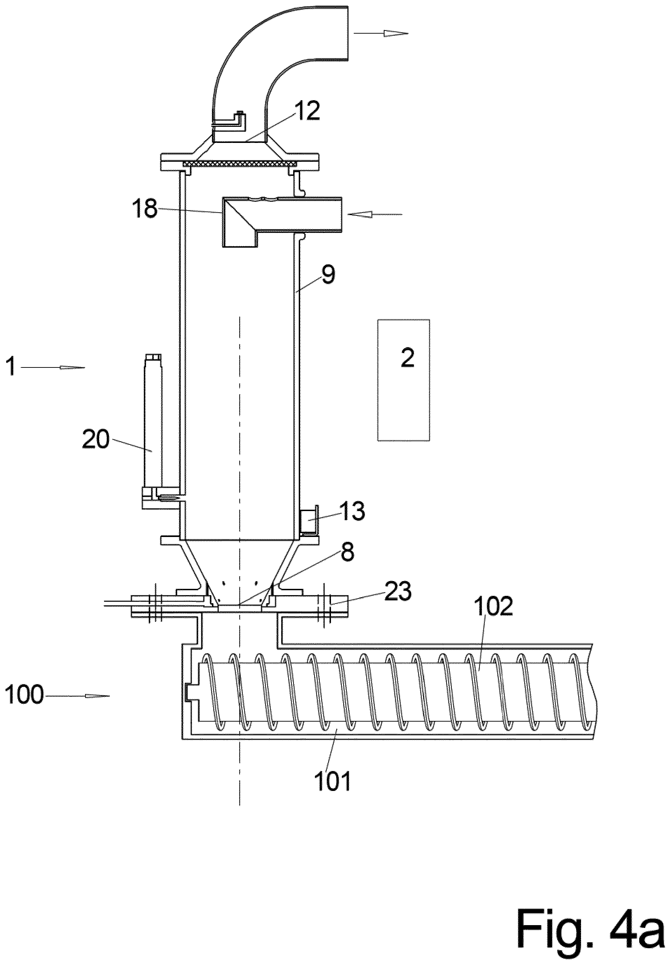

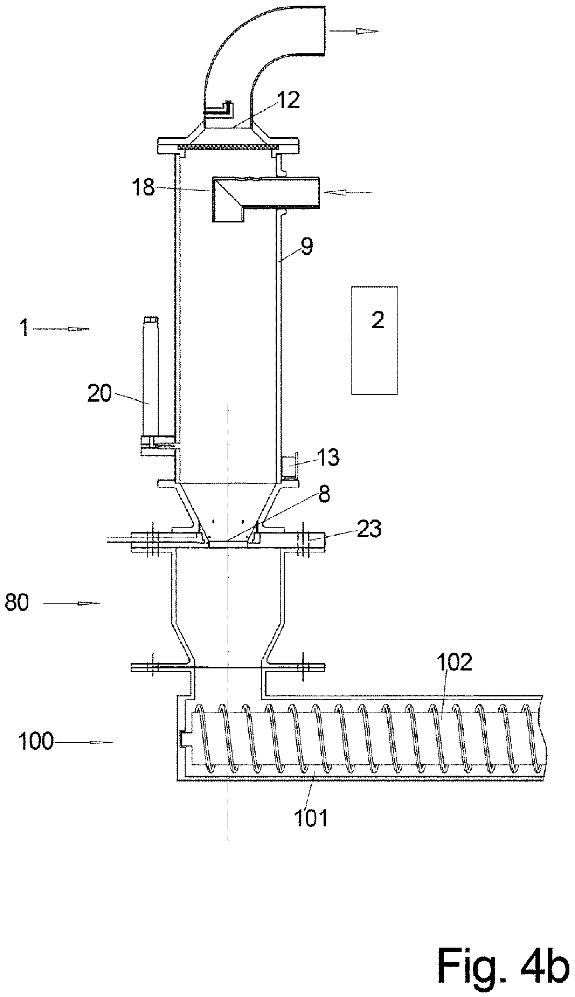

Die **Figuren 4a****,** **b** zeigen eine Behandlungseinheit, die weder einen Granulat-Trockner 30 noch eine Verschlusseinheit 40 und damit auch kein Verschlusselement 44 umfasst.

Somit kann das Granulat 4 aus der dauerhaft offenen unteren Granulat-Auslassöffnung 8 des Entstaubers 1 direkt in den Verbraucher 100 fallen, auf dem sie in **Figur 4a** direkt montiert ist.

In **Figur 4b** ist zwischen Entstauber 1 und Verbraucher 100 dagegen ein Zwischenbehälter 80 montiert, der nur aus einer zylindrischen Umfangswand sowie an deren oberen und unteren Ende radial nach außen vorstehenden ringförmigen Befestigungsflanschen mit Befestigungselementen wie etwa Verschraubungsöffnungen besteht.

Damit wird zwischen dem unteren Granulat-Auslass 8 des Entstaubers 1 und dem Einlauf in den Verbraucher 100 ein zusätzlicher Pufferraum für Granulat geschaffen, was beispielsweise notwendig sein kann, weil der Verbraucher chargenweise arbeitet und die in seinem Fördererkanal 101 bevorratete Menge an Granulat 4 nicht ausreicht für eine solche Charge.

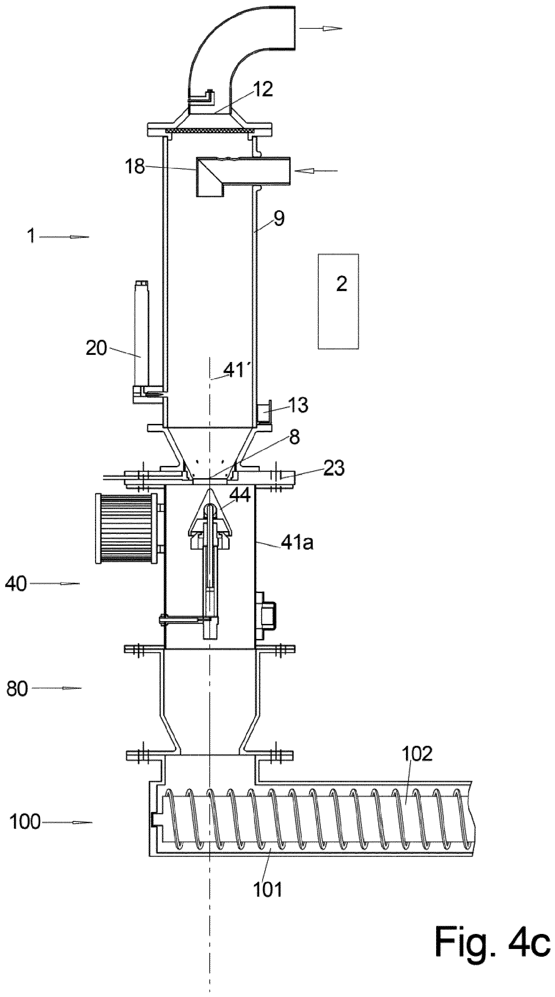

**Figur 4c** unterscheidet sich von **Figur 4b** dadurch, dass direkt unter dem Entstauber 1 und damit zwischen Entstauber 1 und dem Zwischenbehälter 80 eine Verschluss-Einheit 40 vorhanden ist.

Die Behandlungseinheit wird in aller Regel in dieser Kombination zusammengestellt, wenn das innerhalb des Gehäuses der Verschlusseinheit 40 vorhandene Volumen für Granulat nicht ausreicht für den Verbraucher 100, und durch das zusätzliche Volumen des Zwischenbehälters 80 vergrößert werden soll.

### BEZUGSZEICHENLISTE

- 1: Vorrichtung zum Entstauben, Entstauber
- 2: Steuerung
- 3: Förderluft
- 4: Granulat, Granulat-Ansammlung, Granulat-Korn
- 4': Charge
- 5: Sieb
- 6: Abluft
- 7: Granulat-Einlassöffnung
- 8: Granulat-Auslassöffnung
- 9: Entstaubungsbehälter
- 10: Strömungsrichtung
- 11: Staub
- 12: Luft-Auslassöffnung
- 13: Füllstandssensor
- 14: Ejektor-Druckluftdüse, Unterdruck-Erzeuger
- 15: Deckel
- 16: Auslass-Konus
- 16': Konusfläche
- 17: Aufwirbelungs-Düse
- 18: Einlassstutzen
- 19: ionisiertes Gas
- 20: Ionisator
- 21: Gas-Zufuhröffnung
- 22: Druckluftanschluss
- 23: Verbindungselement, Durchgangsöffnung
- 24: Sauglanze

- 30: Granulat-Trockner
- 31: Gehäuse
- 32: Granulat-Einlassöffnung
- 33: Granulat-Auslass Öffnung
- 34: Verbindungselement

- 40: Verschluss-Einheit
- 41: Gehäuse
- 41': Axialrichtung, Vertikale
- 41": Längsmitte
- 41a: Umfangswand
- 41b, c: Befestigungsflansch
- 41d: Deckelplatte
- 42: Granulat-Einlassöffnung
- 43: Granulat-Auslassöffnung
- 44: Verschlusselement, Verschluss-Kegel
- 45: Verschlusselement-Basis, Kegel-Basis
- 46: Luft-Öffnung
- 47: Luft-Filter
- 48: Füllstands-Sensor
- 49: Verbindungselement, Durchgangsöffnung
- 50: Pneumatikzylinder
- 51: Kolbenstange
- 52: Zylinder
- 53: Druckluft-Anschluss

- 70: Adapter

- 80: Zwischenbehälter

- 90: Förderstromerzeuger

- **100**: Verbraucher
- 101: Förderkanal
- 102: Förderschnecke

## Patentansprüche

1. Baukasten zum Erstellen einer Behandlungseinheit für Granulat (4), der folgende Module umfasst:
a) eine Verschlusseinheit (40) für einen hindurch strömenden Granulat-Strom, mit
- einem Gehäuse (41),
- einer Granulat-Einlassöffnung (42) für das Granulat (4) im oberen Teil des Gehäuses (41), insbesondere in dessen Deckelplatte (41d),
- eine Granulat-Auslassöffnung (43) im unteren Teil des Gehäuses (41),
- einem Verschluss-Element (44) im Gehäuse (41), das so ausgebildet ist, dass es eine Granulat-Durchflussöffnung, insbesondere die Granulat-Einlassöffnung (42) oder eine Granulat-Auslassöffnung eines darüber befindlichen Bauteiles, verschließen kann, insbesondere von deren Unterseite aus verschließen kann,
- Verbindungs-Elementen (49), insbesondere Verschraubungs-Öffnungen (49), im unteren Bereich des Gehäuses (41) zum Verbinden mit einem darunter angeordneten Bauteil, und
b) einen Entstauber (1) zum, insbesondere chargenweisen, Entstauben eines Granulates (4), mit:
- einem Entstaubungsbehälter (9), der aufweist:
- mindestens eine Granulat-Einlassöffnung (7) für das Granulat (4),
- eine Granulat-Auslassöffnung (8) im unteren Teil des Entstaubungsbehälters (9), insbesondere in dessen Boden, und
- eine Luft-Auslassöffnung (12), die insbesondere im oberen Teil des Entstaubungsbehälters (9) angeordnet ist,
- einem Ionisator (20),
- einer Aufwirbelungs-Einheit zum Aufwirbeln des Granulates (4) im Entstaubungsbehälter (9),
c) eine Steuerung (2), die in der Lage ist, alle beweglichen Teile, insbesondere Ventile, des Entstaubers (1) zu steuern,
**dadurch gekennzeichnet, dass**
- die Steuerung auch dazu in der Lage ist, die Aufwirbelungs-Einheit zu steuern,
- die Verschlusseinheit (40) Verbindungs-Elemente (49), insbesondere Verschraubungs-Öffnungen (49), im oberen Bereich des Gehäuses (41) zum Verbinden mit einem darüber angeordneten Bauteil aufweist,
- der Entstauber (1) Verbindungs-Elemente (23), insbesondere Verschraubungs-Öffnungen (23), im unteren Bereich des Entstaubungsbehälters (9) zum Verbinden mit einem darunter angeordneten Bauteil, insbesondere der Verschlusseinheit (40), aufweist,
- der Baukasten einen Granulat-Trockner (30) als weiteres Modul umfasst, wobei die Granulat-Auslassöffnung (43) in der Verschluss-Einheit (40) und die Granulat-Einlassöffnung (32) in dem Granulat-Trockner (30) so angeordnet sind, dass bei mittels der beidseits vorhandenen Verbindungs-Elemente, insbesondere Verschraubungs-Öffnungen, bei direkt aufeinander montierter Verschlusseinheit (40) und Granulat-Trockner (30) in der Aufsicht betrachtet die Granulat-Auslassöffnung (43) innerhalb der Granulat-Einlassöffnung (32) liegt, insbesondere konzentrisch zu dieser liegt oder zu dieser deckungsgleich liegt,
- und wobei die Module (1, 40, 30), und deren Verbindungselemente zum gegenseitigen Verbinden, für eine freie wechselseitige Kombinierbarkeit derart spezifisch ausgestaltet sind, dass wahlweise zumindest jede der folgenden drei Montagekonfigurationen ermöglicht wird:
- Montage des Entstaubers (1) auf dem Granulat-Trockner (30) unter Zwischenanordnung der Verschlusseinheit (40) zwischen dem Entstauber (1) und dem Granulat-Trockner (30),
- Montage des Entstaubers (1) auf dem Granulat-Trockner (30) ohne Zwischenanordnung der Verschlusseinheit (40) zwischen dem Entstauber (1) und dem Granulat-Trockner (30), und
- Montage des Granulat-Trockners (30) auf der Verschlusseinheit (40).

2. Baukasten nach Anspruch 1,
**dadurch gekennzeichnet, dass**
die Granulat-Auslassöffnung (8) im Entstauber (1) und die Granulat-Einlassöffnung (42) in der Verschlusseinheit (40) so angeordnet sind, dass bei mittels der beidseits vorhandenen Verbindungs-Elemente (23, 49), insbesondere Verschraubungs-Öffnungen, bei aufeinander montiertem Entstauber (1) und Verschlusseinheit (40) die Granulat-Auslassöffnung (8) des Entstaubers (1) und die Granulat-Einlassöffnung (42) der Verschlusseinheit (40) konzentrisch, insbesondere fluchtend, übereinander angeordnet sind.

3. Baukasten nach Anspruch 1 oder 2,
**dadurch gekennzeichnet, dass**
- der Baukasten als weiteres Modul einen, insbesondere plattenförmigen, insbesondere ringförmigen, Adapter (70) mit einer vertikal offenen Durchgangsöffnung und insbesondere einer möglichst geringen axialen Höhe in Durchgangsrichtung der Durchgangsöffnung umfasst, um den Adapter (70) zwischen zwei Module des Baukastens montieren zu können oder ein Modul des Baukastens, insbesondere den Granulat-Trockner (60), auf einem Verbraucher (100) montieren zu können,
- indem der Adapter (70) zwei Sorten von Verbindungselementen aufweist, von denen die eine Sorte so ausgebildet ist, dass sie mit den Verbindungselementen des darauf stehenden Moduls zusammenwirken können und die andere Sorte so, dass sie mit den Verbindungselementen des darunter befindlichen Moduls oder dem Verbraucher (100) zusammenwirken können.

4. Baukasten nach einem der Ansprüche 1 bis 3,
**dadurch gekennzeichnet, dass**
- der Baukasten als weiteres Modul einen Zwischenbehälter (80) mit einer vertikal offenen Durchgangsöffnung umfasst, um den Zwischenbehälter (80) zwischen zwei Module des Baukastens montieren zu können oder ein Modul des Baukastens, insbesondere den Granulat-Trockner (60), auf einem Verbraucher (100) montieren zu können,
- indem der Zwischenbehälter (80) insbesondere zwei Sorten von Verbindungselementen aufweist, von denen die eine Sorte so ausgebildet ist, dass sie mit den Verbindungselementen des darauf stehenden Moduls zusammenwirken können und die andere Sorte so, dass sie mit den Verbindungselementen des darunter befindlichen Moduls oder dem Verbraucher (100) zusammenwirken können.

5. Baukasten nach einem der vorhergehenden Ansprüche,
**dadurch gekennzeichnet, dass**
- der Baukasten einen, insbesondere stromaufwärts des Entstaubungsbehälters (9) anordenbaren, Förderstrom-Erzeuger (90) insbesondere in Form einer Ejektor-Druckluftdüse (14) mit einem Druckluftanschluss enthält, die insbesondere in einer Sauglanze (24) angeordnet ist,
oder/und
- der Baukasten einen Staubabscheider, insbesondere mit einem Abluft-Filter und/oder einem Unterdruck-Erzeuger, insbesondere eine Ejektor-Druckluftdüse (14) umfasst, der insbesondere stromabwärts des Entstaubungsbehälters (9) angeordnet werden kann.

6. Baukasten nach einem der vorhergehenden Ansprüche,
**dadurch gekennzeichnet, dass**
- der Entstauber (1) kein Verschlusselement zum Verschließen seiner Granulat-Auslassöffnung (8) umfasst, also verschlussfrei ist,
- die den Entstaubungsbehälter (9) umgebenden Umfangswände zumindest auf den dem Innenraum zugewandten Innenflächen aus einem elektrisch nicht leitfähigen Material, insbesondere Glas, bestehen.

7. Baukasten nach einem der vorhergehenden Ansprüche,
**dadurch gekennzeichnet, dass**
die Aufwirbelungs-Einheit nach oben gerichtete Aufwirbelungs-Düsen (17),
die mit einem Druckluft-Anschluss in Verbindung stehen, im unteren Teil des Entstaubungsbehälters (9), insbesondere in oder nahe der Granulat-Auslassöffnung (8), aufweist.

8. Baukasten nach Anspruch 7,
**dadurch gekennzeichnet, dass**
- der Querschnitt des Entstaubungsbehälters (9) sich im unteren Teil zur Granulat-Auslassöffnung (8) hin verringert, insbesondere mittels wenigstens einer Konusfläche (16'),
- die Aufwirbelungs-Düsen (17) in der den Querschnitt nach unten verjüngenden Fläche, insbesondere der Konusfläche (16`), angeordnet sind,
- insbesondere die Aufwirbelungs-Düsen (17) nach oben gerichtet sind, also unter einem Winkel, der von der Vertikalen um höchstens 45°, besser höchstens 30°, besser höchstens 20°, besser höchstens 10° abweicht.
- wobei die Aufwirbelungs-Düsen (17) vorzugsweise hinsichtlich Druck und/oder Strömungsgeschwindigkeit und/oder Volumenstrom steuerbar sind, insbesondere durch die Steuerung (2) steuerbar sind,
- wobei vorzugsweise die Aufwirbelungs-Düsen (17) zusammen mit der Steuerung (2) in der Lage sind, eine solche nach oben gerichtete Gegenströmung zu erzeugen, dass die dadurch hochgewirbelten Granulat-Körner (4) mehrheitlich schwerkraftbedingt ihre Aufwärtsbewegung beenden, bevor sie die obere Luft-Auslassöffnung (12) erreichen.

9. Baukasten nach einem der vorhergehenden Ansprüche,
**dadurch gekennzeichnet, dass**
- der Ionisator (20) eine Ionisier-Spitze umfasst, die im freien Endbereich einer Luft-Zufuhrleitung angeordnet ist und in eine Gas-Zufuhröffnung (21) in der Wandung des Entstaubungsbehälters (9) oder gar in den Innenraum des Entstaubungsbehälters (9) hineinragt, sodass sie insbesondere von der strömenden Luft überstrichen wird
oder/und
- die Gas-Zufuhröffnung (21) mit daran angeschlossenem Ionisator (20) im unteren Bereich des Entstaubungsbehälters (9), insbesondere oberhalb des Auslass-Konus (16), angeordnet ist.

10. Baukasten nach einem der vorhergehenden Ansprüche,
**dadurch gekennzeichnet, dass**
die Luft-Auslassöffnung (12) von einem leicht demontierbaren Sieb (5) überdeckt ist oder dauerhaft und insbesondere vollständig offen ist.

11. Baukasten nach einem der vorhergehenden Ansprüche,
**dadurch gekennzeichnet, dass**
- die Höhe des Entstaubungsbehälters (9) mindestens 100 mm, besser mindestens 200 mm, besser mindestens 300 mm besser mindestens 400 mm beträgt
oder/und
- die Umfangswand des Entstaubungsbehälters (9) ein aufrecht stehendes, oben und unten offenes, Glasrohr ist, insbesondere mit einem rotations-symmetrischen Querschnitt, und der Querschnitt insbesondere über die gesamte Länge unverändert ist.

12. Baukasten nach einem der vorhergehenden Ansprüche,
**dadurch gekennzeichnet, dass**
die Granulat-Einlassöffnung (7) in der oberen Hälfte, insbesondere im oberen Drittel, der Höhe des Entstaubungsbehälters (9) angeordnet ist.

13. Baukasten nach einem der vorhergehenden Ansprüche,
**dadurch gekennzeichnet, dass**
die Steuerung (2) Betriebsmodi für den chargenweisen Betrieb und den kontinuierlichen Betrieb aufweist und die Steuerung (2) zwischen diesen beiden Betriebsmodi umgeschaltet werden kann.

14. Baukasten nach einem der vorhergehenden Ansprüche,
**dadurch gekennzeichnet, dass**
- der Entstaubungsbehälter (9) mehrere Granulat-Einlassöffnungen (8) aufweist,
oder
- der Entstauber (1) einen Entstaubungsbehälter (9) mit nur einer Granulat-Einlassöffnung (8) sowie eine Förderleitung aufweist, die außerhalb des Entstaubungsbehälters (9) eine Verzweigung aufweist.

15. Baukasten nach einem der vorhergehenden Ansprüche,
**dadurch gekennzeichnet, dass**
die Steuerung (2) des Entstaubers (1) Signal-Anschlüsse zum signaltechnischen Verbinden mit der Verschluss-Einheit (40), insbesondere deren Steuerung, aufweist.

16. Baukasten nach einem der vorhergehenden Ansprüche,
**dadurch gekennzeichnet, dass**
die Steuerung (2) des Entstaubers (1) eine Mühlen-Steuerung umfasst, um den Sammelbehälter einer Mühle, in der Abfall-Teile aus einer Spritzguss-Maschine gemahlen werden, zu entleeren und der Granulat-Einlassöffnung (7) des Entstaubers (1) zuzuführen.

17. Baukasten nach einem der vorhergehenden Ansprüche,
**dadurch gekennzeichnet, dass**
- das Verschluss-Element (44) der Verschlusseinheit (40) ein nach oben aufragendes Element, insbesondere ein Verschluss-Kegel (44) ist, der im verschließenden Zustand durch die obere Granulat-Einlassöffnung (42) nach oben aus dem Gehäuse (41) hinausragt,
- das Verschlusselement (44), insbesondere der Verschluss-Kegel (44), schwenkbar um mindestens eine horizontale Achse, besser um zwei sich kreuzende horizontale Achsen, auf einem ihn tragenden Bauteil, insbesondere einer Verschlusselement-Basis (45), befestigt ist.

18. Baukasten nach einem der vorhergehenden Ansprüche,
**dadurch gekennzeichnet, dass**
- das Gehäuse (41) der Verschlusseinheit (40) Umfangswände sowie einen oberen und einen unteren Befestigungsflansch (41b, c), an dem die Verbindungs-Elemente (49) angeordnet sind, aufweist
und/oder
- eine Luft-Öffnung (46) im Gehäuse (41), insbesondere in dessen Umfangswand (41a), vorhanden ist, die mit einem Luft-Filter (49) strömungstechnisch verbunden ist, der insbesondere an der Außenseite des Gehäuses (41) befestigt ist.

19. Baukasten nach einem der vorhergehenden Ansprüche,
**dadurch gekennzeichnet, dass**
- die Verschlusseinheit (40) eine, insbesondere elektronische, Steuerung für das Verschlusselement (44) aufweist,
- wobei diese Steuerung signaltechnische Anschlüsse, insbesondere zum Verbinden mit einer anderen Steuerung, besitzt.

## Claims

1. Modular system for constructing a treatment unit for granules (4), which modular system comprises the following modules:
a) a closure unit (40) for a stream of granules flowing through, having
- a housing (41),
- a granule inlet opening (42) for the granules (4) in the upper part of the housing (41), in particular in the cover plate (41d) thereof,
- a granule outlet opening (43) in the lower part of the housing (41),
- a closure element (44) in the housing (41), which closure element is so configured that it is able to close a granule through-flow opening, in particular the granule inlet opening (42) or a granule outlet opening of a component located above it, in particular is able to close said opening from the underside thereof,
- connecting elements (49), in particular screw openings (49), in the lower region of the housing (41) for connection to a component arranged beneath it, and
b) a dust extractor (1) for extracting dust, in particular batchwise, from granules (4), having:
- a dust extraction container (9) which has:
- at least one granule inlet opening (7) for the granules (4),
- a granule outlet opening (8) in the lower part of the dust extraction container (9), in particular in the base thereof, and
- an air outlet opening (12) which is arranged in particular in the upper part of the dust extraction container (9),
- an ioniser (20),
- a swirl unit for swirling the granules (4) in the dust extraction container (9),
c) a controller (2) which is capable of controlling all the moving parts, in particular valves, of the dust extractor (1),
**characterised in that**
- the controller is also capable of controlling the swirl unit,
- the closure unit (40) has connecting elements (49), in particular screw openings (49), in the upper region of the housing (41) for connection to a component located above it,
- the dust extractor (1) has connecting elements (23), in particular screw openings (23), in the lower region of the dust extraction container (9) for connection to a component arranged beneath it, in particular the closure unit (40),
- the modular system comprises a granule dryer (30) as a further module, wherein the granule outlet opening (43) is arranged in the closure unit (40) and the granule inlet opening (32) is arranged in the granule dryer (30) such that, when the closure unit (40) and the granule dryer (30) are mounted directly one on top of the other by means of the connecting elements, in particular screw openings, that are present on both sides, the granule outlet opening (43), when seen in a top view, lies inside the granule inlet opening (32), in particular is concentric therewith or is congruent therewith,
- and wherein the modules (1, 40, 30), and their connecting elements for mutual connection, are specifically designed for free mutual combinability such that optionally at least each of the following three mounting configurations is made possible:
- mounting of the dust extractor (1) on the granule dryer (30) with the interposition of the closure unit (40) between the dust extractor (1) and the granule dryer (30),
- mounting of the dust extractor (1) on the granule dryer (30) without the interposition of the closure unit (40) between the dust extractor (1) and the granule dryer (30), and
- mounting of the granule dryer (30) on the closure unit (40).

2. Modular system according to claim 1,
**characterised in that**
the granule outlet opening (8) is arranged in the dust extractor (1) and the granule inlet opening (42) is arranged in the closure unit (40) such that, when the dust extractor (1) and the closure unit (40) are mounted one on top of the other by means of the connecting elements (23, 49), in particular screw openings, that are present on both sides, the granule outlet opening (8) of the dust extractor (1) and the granule inlet opening (42) of the closure unit (40) are arranged concentrically, in particular in alignment, one above the other.

3. Modular system according to claim 1 or 2,
**characterised in that**
- the modular system comprises as a further module an adapter (70), in particular a plate-shaped, in particular annular, adapter, having a vertically open passage opening and in particular as small an axial height as possible in the passage direction of the passage opening, in order to be able to mount the adapter (70) between two modules of the modular system or in order to be able to mount one module of the modular system, in particular the granule dryer (60), on a consumer (100),
- **in that** the adapter (70) has two types of connecting elements, of which one type is so configured that they are able to cooperate with the connecting elements of the module standing thereon, and the other type is so configured that they are able to cooperate with the connecting elements of the module located therebeneath or with the consumer (100).

4. Modular system according to any one of claims 1 to 3,
**characterised in that**
- the modular system comprises as a further module an intermediate container (80) having a vertically open passage opening, in order to be able to mount the intermediate container (80) between two modules of the modular system or in order to be able to mount one module of the modular system, in particular the granule dryer (60), on a consumer (100),
- **in that** the intermediate container (80) has in particular two types of connecting elements, of which one type is so configured that they are able to cooperate with the connecting elements of the module standing thereon, and the other type is so configured that they are able to cooperate with the connecting elements of the module located therebeneath or with the consumer (100).

5. Modular system according to any one of the preceding claims,
**characterised in that**
- the modular system contains a conveying stream generator (90) which can be arranged in particular upstream of the dust extraction container (9) and in particular is in the form of an ejector compressed-air nozzle (14) which has a compressed-air connection and is arranged in particular in a suction lance (24),
or/and
- the modular system comprises a dust separator, in particular having an exhaust air filter and/or a low-pressure generator, in particular an ejector compressed-air nozzle (14), which can be arranged in particular downstream of the dust extraction container (9).

6. Modular system according to any one of the preceding claims,
**characterised in that**
- the dust extractor (1) does not comprise a closure element for closing its granule outlet opening (8), that is to say is closure-free,
- the circumferential walls surrounding the dust extraction container (9) consist, at least on the inner surfaces facing the interior, of a non-electrically conductive material, in particular glass.

7. Modular system according to any one of the preceding claims,
**characterised in that**
the swirl unit has upwardly directed swirl nozzles (17), which are in communication with a compressed-air connection, in the lower part of the dust extraction container (9), in particular in or close to the granule outlet opening (8).

8. Modular system according to claim 7,
**characterised in that**
- the cross section of the dust extraction container (9) decreases in the lower part towards the granule outlet opening (8), in particular by means of at least one conical surface (16'),
- the swirl nozzles (17) are arranged in the surface that tapers the cross section downwards, in particular in the conical surface (16'),
- in particular the swirl nozzles (17) are directed upwards, that is to say at an angle that differs from the vertical by not more than 45°, better still not more than 30°, better still not more than 20°, better still not more than 10°,
- wherein the swirl nozzles (17) are preferably controllable in respect of pressure and/or flow velocity and/or volume flow, in particular are controllable by the controller (2),
- wherein preferably the swirl nozzles (17) together with the controller (2) are capable of generating an upwardly directed counter-flow such that the granule grains (4) swirled up thereby mostly complete their upward movement, due to gravity, before they reach the upper air outlet opening (12).

9. Modular system according to any one of the preceding claims,
**characterised in that**
- the ioniser (20) comprises an ionising tip which is arranged in the free end region of an air supply line and projects into a gas supply opening (21) in the wall of the dust extraction container (9) or even into the interior of the dust extraction container (9), so that the flowing air in particular passes over it,
or/and
- the gas supply opening (21) with the ioniser (20) attached thereto is arranged in the lower region of the dust extraction container (9), in particular above the outlet cone (16).

10. Modular system according to any one of the preceding claims,
**characterised in that**
the air outlet opening (12) is covered by a readily removable screen (5) or is permanently and in particular completely open.

11. Modular system according to any one of the preceding claims,
**characterised in that**
- the height of the dust extraction container (9) is at least 100 mm, better still at least 200 mm, better still at least 300 mm, better still at least 400 mm,
or/and
- the circumferential wall of the dust extraction container (9) is an upright glass tube that is open at the top and bottom, in particular having a rotationally symmetrical cross section, and the cross section does not change in particular over the entire length.

12. Modular system according to any one of the preceding claims,
**characterised in that**
the granule inlet opening (7) is arranged in the upper half, in particular in the upper third, of the height of the dust extraction container (9).

13. Modular system according to any one of the preceding claims,
**characterised in that**
the controller (2) has operating modes for batchwise operation and for continuous operation, and the controller (2) can be switched between these two operating modes.

14. Modular system according to any one of the preceding claims,
**characterised in that**
- the dust extraction container (9) has a plurality of granule inlet openings (8), or
- the dust extractor (1) has a dust extraction container (9) having only one granule inlet opening (8), and also a conveyor line which has a branch outside the dust extraction container (9).

15. Modular system according to any one of the preceding claims,
**characterised in that**
the controller (2) of the dust extractor (1) has signal connections for connection by means of signals to the closure unit (40), in particular to the controller thereof.

16. Modular system according to any one of the preceding claims,
**characterised in that**
the controller (2) of the dust extractor (1) has a mill controller for emptying the collecting container of a mill, in which waste parts from an injection-moulding machine are ground, and supplying them to the granule inlet opening (7) of the dust extractor (1).

17. Modular system according to any one of the preceding claims,
**characterised in that**
- the closure element (44) of the closure unit (40) is an upwardly projecting element, in particular a closure cone (44), which in the closing state projects upwards out of the housing (41) through the upper granule inlet opening (42),
- the closure element (44), in particular the closure cone (44), is fastened to a component that carries it, in particular to a closure element base (45), so as to be pivotable about at least one horizontal axis, better still about two intersecting horizontal axes.

18. Modular system according to any one of the preceding claims,
**characterised in that**
- the housing (41) of the closure unit (40) has circumferential walls as well as an upper and a lower fastening flange (41b, c), on which the connecting elements (49) are arranged,
and/or
- there is an air opening (46) in the housing (41), in particular in the circumferential wall (41a) thereof, which air opening is fluidically connected to an air filter (49) which is fastened in particular to the outside of the housing (41).

19. Modular system according to any one of the preceding claims,
**characterised in that**
- the closure unit (40) has a controller, in particular an electronic controller, for the closure element (44),
- wherein this controller has signalling connections, in particular for connection to another controller.

## Revendications

1. Système modulaire pour créer une unité de traitement de granulés (4), comprenant les modules suivants :
a) une unité d'obturation (40) pour un flux de granulés qui la traverse, comprenant
- un boîtier (41),
- une ouverture d'entrée de granulés (42) pour les granulés (4) dans la partie supérieure du boîtier (41), en particulier dans sa plaque de couvercle (41d),
- une ouverture de sortie de granulés (43) dans la partie inférieure du boîtier (41),
- un élément d'obturation (44) dans le boîtier (41), qui est conçu de manière à pouvoir obturer une ouverture de passage de granulés, en particulier l'ouverture d'entrée de granulés (42) ou une ouverture de sortie de granulés d'un composant situé au-dessus, en particulier à partir de sa face inférieure,
- des éléments de liaison (49), en particulier des ouvertures de vissage (49), dans la zone inférieure du boîtier (41) pour la liaison avec un composant disposé en dessous, et
b) un dépoussiéreur (1) pour dépoussiérer, en particulier par lots, des granulés (4), comprenant :
- un récipient de dépoussiérage (9), qui présente :
- au moins une ouverture d'entrée de granulés (7) pour les granulés (4),
- une ouverture de sortie de granulés (8) dans la partie inférieure du récipient de dépoussiérage (9), en particulier dans son fond, et
- une ouverture de sortie d'air (12) disposée en particulier dans la partie supérieure du récipient de dépoussiérage (9),
- un ionisateur (20),
- une unité de tourbillonnement pour soulever en tourbillons les granulés (4) dans le récipient de dépoussiérage (9),
c) une commande (2) capable de commander toutes les pièces mobiles, en particulier les vannes, du dépoussiéreur (1),
**caractérisé en ce que**
- la commande est également capable de commander l'unité de tourbillonnement,
- l'unité d'obturation (40) présente des éléments de liaison (49), en particulier des ouvertures de vissage (49), dans la zone supérieure et inférieure du boîtier (41) pour la liaison avec un composant disposé au-dessus,
- le dépoussiéreur (1) présente des éléments de liaison (23), en particulier des ouvertures de vissage (23), dans la zone inférieure du récipient de dépoussiérage (9) pour la liaison avec un composant disposé en dessous, en particulier avec l'unité d'obturation (40),
- le système modulaire comprend comme autre module un séchoir de granulés (30), l'ouverture de sortie de granulés (43) dans l'unité d'obturation (40) et l'ouverture d'entrée de granulés (32) dans le séchoir de granulés (30) étant disposées de telle sorte que, lorsque l'unité d'obturation (40) et le séchoir de granulés (30) sont montés directement l'un sur l'autre à l'aide des éléments de liaison présents de part et d'autre, en particulier à l'aide des ouvertures de vissage, l'ouverture de sortie de granulés (43) se trouve, vue de dessus, à l'intérieur de l'ouverture d'entrée de granulés (32), en particulier concentriquement à celle-ci ou en coïncidence avec celle-ci,
- et les modules (1, 40, 30) et leurs éléments de liaison destinés à leur liaison mutuelle sont conçus spécifiquement pour une possibilité de combinaison mutuelle libre de manière à permettre au choix au moins chacune des trois configurations de montage suivantes :
- monter le dépoussiéreur (1) sur le séchoir de granulés (30) avec interposition de l'unité d'obturation (40) entre le dépoussiéreur (1) et le séchoir de granulés (30),
- monter le dépoussiéreur (1) sur le séchoir de granulés (30) sans interposition de l'unité d'obturation (40) entre le dépoussiéreur (1) et le séchoir de granulés (30), et
- monter le séchoir de granulés (30) sur l'unité d'obturation (40).

2. Système modulaire selon la revendication 1,
**caractérisé en ce que**
l'ouverture de sortie de granulés (8) dans le dépoussiéreur (1) et l'ouverture d'entrée de granulés (42) dans l'unité d'obturation (40) sont disposées de telle sorte que, lorsque le dépoussiéreur (1) et l'unité d'obturation (40) sont montés l'un sur l'autre à l'aide des éléments de liaison (23, 49) présents de part et d'autre, en particulier à l'aide des ouvertures de vissage, l'ouverture de sortie de granulés (8) du dépoussiéreur (1) et l'ouverture d'entrée de granulés (42) de l'unité d'obturation (40) sont disposées concentriquement l'une au-dessus de l'autre, en particulier en alignement.

3. Système modulaire selon la revendication 1 ou 2,
**caractérisé en ce que**
- le système modulaire comprend comme autre module un adaptateur (70), en particulier en forme de plaque, en particulier en forme d'anneau, ayant une ouverture de passage ouverte verticalement et ayant en particulier une hauteur axiale aussi faible que possible dans le sens de passage de l'ouverture de passage, afin de pouvoir monter l'adaptateur (70) entre deux modules du système modulaire ou de pouvoir monter un module du système modulaire, en particulier le séchoir de granulés (60), sur un consommateur (100),
- du fait que l'adaptateur (70) présente deux types d'éléments de liaison, dont l'un est conçu de manière à pouvoir coopérer avec les éléments de liaison du module posé dessus et l'autre type est conçu de manière à pouvoir coopérer avec les éléments de liaison du module situé en dessous ou avec le consommateur (100).

4. Système modulaire selon l'une des revendications 1 à 3,
**caractérisé en ce que**
- le système modulaire comprend comme autre module un récipient intermédiaire (80) ayant une ouverture de passage ouverte verticalement, afin de permettre de monter le récipient intermédiaire (80) entre deux modules du système modulaire ou de monter un module du système modulaire, en particulier le séchoir de granulés (60), sur un consommateur (100),
- du fait que le récipient intermédiaire (80) présente en particulier deux types d'éléments de liaison, dont l'un est conçu de manière à pouvoir coopérer avec les éléments de liaison du module posé dessus et l'autre type est conçu de manière à pouvoir coopérer avec les éléments de liaison du module situé en dessous ou avec le consommateur (100).

5. Système modulaire selon l'une des revendications précédentes,
**caractérisée en ce que**
- le système modulaire comprend un générateur de flux de transport (90), en particulier sous la forme d'une buse d'air comprimé à éjecteur (14) ayant un raccord d'air comprimé, qui peut être disposé en particulier en amont du récipient de dépoussiérage (9) et qui est en particulier disposé dans une lance d'aspiration (24),
ou/et
- le système modulaire comprend un séparateur de poussière ayant en particulier un filtre d'évacuation d'air et/ou un générateur de dépression, en particulier une buse d'air comprimé à éjecteur (14), qui peut être disposé en particulier en aval du récipient de dépoussiérage (9).

6. Système modulaire selon l'une des revendications précédentes,
**caractérisé en ce que**
- le dépoussiéreur (1) ne comprend pas d'élément d'obturation pour obturer son ouverture de sortie de granulés (8), c'est-à-dire qu'il est dépourvu d'obturateur,
- les parois périphériques entourant le récipient de dépoussiérage (9) sont constituées, au moins sur les surfaces intérieures tournées vers l'espace intérieur, d'un matériau non conducteur de l'électricité, en particulier du verre.

7. Système modulaire selon l'une des revendications précédentes,
**caractérisé en ce que**
l'unité de tourbillonnement comporte des buses de tourbillonnement (17) dirigées vers le haut et communiquant avec un raccord d'air comprimé, situées dans la partie inférieure du récipient de dépoussiérage (9), en particulier dans ou à proximité de l'ouverture de sortie de granulés (8).

8. Système modulaire selon la revendication 7,
**caractérisé en ce que**
- la section transversale du récipient de dépoussiérage (9) diminue dans la partie inférieure en direction de l'ouverture de sortie de granulés (8), en particulier au moyen d'au moins une surface conique (16'),
- les buses de tourbillonnement (17) sont disposées dans la surface rétrécissant la section transversale vers le bas, en particulier dans la surface conique (16'),
- en particulier, les buses de tourbillonnement (17) sont orientées vers le haut, c'est-à-dire selon un angle qui s'écarte de la verticale de 45° au maximum, mieux de 30° au maximum, mieux de 20° au maximum, mieux de 10° au maximum,
- les buses de tourbillonnement (17) pouvant de préférence être commandées en termes de pression et/ou de vitesse d'écoulement et/ou de débit volumétrique, en particulier pouvant être commandées par la commande (2),
- les buses de tourbillonnement (17) étant de préférence capables, conjointement avec la commande (2), de générer un contre-courant dirigé vers le haut tel que les grains de granulés (4) ainsi soulevés en tourbillons terminent majoritairement leur mouvement ascendant sous l'effet de la gravité avant d'atteindre l'ouverture supérieure de sortie d'air (12).

9. Système modulaire selon l'une des revendications précédentes,
**caractérisé en ce que**
- l'ionisateur (20) comprend une pointe d'ionisation qui est disposée dans la zone d'extrémité libre d'un conduit d'alimentation en air et qui pénètre dans une ouverture d'alimentation en gaz (21), ménagée dans la paroi du récipient de dépoussiérage (9), ou qui pénètre même dans l'espace intérieur du récipient de dépoussiérage (9) de manière à être balayée en particulier par l'air qui s'écoule,
ou/et
- l'ouverture d'alimentation en gaz (21) avec l'ionisateur (20) qui y est raccordé est disposée dans la zone inférieure du récipient de dépoussiérage (9), en particulier au-dessus du cône de sortie (16).

10. Système modulaire selon l'une des revendications précédentes,
**caractérisé en ce que**
l'ouverture de sortie d'air (12) est recouverte par un tamis (5) facilement démontable ou est ouverte en permanence et en particulier complètement.

11. Système modulaire selon l'une des revendications précédentes,
**caractérisée en ce que**
- la hauteur du récipient de dépoussiérage (9) est d'au moins 100 mm, mieux d'au moins 200 mm, mieux d'au moins 300 mm, mieux d'au moins 400 mm, ou/et
- la paroi périphérique du récipient de dépoussiérage (9) est un tube de verre vertical, ouvert en haut et en bas, en particulier avec une section transversale à symétrie de révolution, et la section transversale est invariable, en particulier sur toute la longueur.

12. Système modulaire selon l'une des revendications précédentes,
**caractérisé en ce que**
l'ouverture d'entrée de granulés (7) est située dans la moitié supérieure, en particulier dans le tiers supérieur, de la hauteur du récipient de dépoussiérage (9).

13. Système modulaire selon l'une des revendications précédentes,
**caractérisée en ce que**
la commande (2) présente des modes de fonctionnement pour le fonctionnement par lots et le fonctionnement continu, et la commande (2) peut être commutée entre ces deux modes de fonctionnement.

14. Système modulaire selon l'une des revendications précédentes,
**caractérisé en ce que**
- le récipient de dépoussiérage (9) présente plusieurs ouvertures d'entrée de granulés (8),
ou
- le dépoussiéreur (1) présente un récipient de dépoussiérage (9) ayant une seule ouverture d'entrée de granulés (8) ainsi qu'une conduite de transport qui présente une bifurcation à l'extérieur du récipient de dépoussiérage (9).

15. Système modulaire selon l'une des revendications précédentes,
**caractérisé en ce que**
la commande (2) du dépoussiéreur (1) présente des raccords de signal pour la connexion de signalisation avec l'unité d'obturation (40), en particulier avec sa commande.

16. Système modulaire selon l'une des revendications précédentes,
**caractérisé en ce que**
la commande (2) du dépoussiéreur (1) comprend une commande de broyeur pour vider le récipient collecteur d'un broyeur dans lequel sont broyées des parties de déchets provenant d'une machine de moulage par injection et pour les amener à l'ouverture d'entrée de granulés (7) du dépoussiéreur (1).

17. Système modulaire selon l'une des revendications précédentes,
**caractérisé en ce que**
- l'élément d'obturation (44) de l'unité d'obturation (40) est un élément s'élevant vers le haut, en particulier un cône d'obturation (44), qui, à l'état d'obturation, fait saillie vers le haut hors du boîtier (41) à travers l'ouverture supérieure d'entrée de granulés (42),
- l'élément d'obturation (44), en particulier le cône d'obturation (44), est fixé sur un composant qui le porte, en particulier sur une base d'élément d'obturation (45), de manière à pouvoir pivoter autour d'au moins un axe horizontal, de préférence autour de deux axes horizontaux qui se croisent.

18. Système modulaire selon l'une des revendications précédentes,
**caractérisée en ce que**
- le boîtier (41) de l'unité d'obturation (40) comporte des parois périphériques ainsi que des brides de fixation supérieure et inférieure (41b, c) sur lesquelles sont disposés les éléments de liaison (49),
et/ou
- une ouverture d'air (46) est présente dans le boîtier (41), en particulier dans sa paroi périphérique (41a), qui est reliée en termes d'écoulement à un filtre à air (49) qui est fixé en particulier sur le côté extérieur du boîtier (41).

19. Système modulaire selon l'une des revendications précédentes,
**caractérisée en ce que**
- l'unité d'obturation (40) présente une commande, en particulier électronique, pour l'élément d'obturation (44),
- cette commande possédant des raccords de signalisation, en particulier pour la connexion à une autre commande.
